# EUROPEAN PATENT APPLICATION

(11) **EP 4 748 238 A1**
(43) Date of publication of application: **27.05.2026**
(21) Application number: 24848432.1
(22) Date of filing: 15.07.2024
(51) Int. Cl.: A23L 23/00

(54) **SPREADABLE AVOCADO AND GOAT'S CHEESE CREAM**

(30) Priority: 17.07.2023 ES 202331310 U
(71) Applicant: Axarfruit, S.L., 29700 Vélez (Málaga) (ES)
(72) Inventor: MARTÍNEZ LÓPEZ, Ángel Álvaro, 29700 VELEZ-MALAGA (ES); MARTÍNEZ LÓPEZ, Vicente, 29700 VELEZ-MALAGA (ES)
(74) Representative: Sahuquillo Huerta, Jesús
(86) International application number: PCT/ES2024/070447
(87) International publication number: WO 2025/027217

(57) **Abstract**

Avocado and goat's cheese spread in a homogeneous mixture that combines their organoleptic and nutritional properties in a uniform blend of flavours and fats, with a creamy, aromatic texture and intense flavour, promoting healthy consumption and increasing the range of quick-preparation food products. The spreadable avocado and goat's cheese cream that is the subject of this invention comprises at least a cold homogeneous mixture of the following components in the proportions indicated:
- Hass avocado: 80% to 90%.
- Lactose-free matured goat's cheese: 6% to 10%.
- Raisins: 3 to 5%.
- Onion, salt, ascorbic acid, potassium sorbate and citric acid: 2 to 4%.

## Description

### TECHNICAL FIELD

The present invention falls within the field of food, specifically in the field of spreadable creams and sauces.

### BACKGROUND OF THE INVENTION

One of the fundamental trends in nutrition is the search for a healthy diet, understood as one that allows the body to achieve and maintain optimal functioning, preserve or restore health, and reduce the risk of disease.

To this end, such a diet must be complete and balanced so that it contains all the nutrients the body needs in adequate quantities,and therefore must include a wide variety of healthy foods, including fruit and dairy products.

Among fruits, the consumption of avocados is becoming increasingly widespread. It is the fruit of the avocado tree (Persea americana) and belongs to the Lauraceae family. It is pear-shaped, with a hard, dark skin, and contains a single large, round seed inside. There are many varieties, with names such as Hass, Bacon, Fuerte, Reed, Pinkerton and others.

The flesh is creamy, green or pale yellow in colour, with a flavour reminiscent of hazelnuts. These characteristics allow it to be consumed in various ways and in many different preparations. It adds creaminess and consistency to many recipes and can be used interchangeably in the preparation of sweet desserts and savoury dishes, either as a fruit or as a vegetable.

Avocados are unique in that their main component is not carbohydrates, as in other fruits, but monounsaturated fats, which make up 23% of their weight. Among the monounsaturated fats is oleic acid, which helps control cholesterol levels.

It also contains vitamins A, C, D, K and B and a variety of minerals (potassium, magnesium, calcium, phosphorus, iron, copper and zinc). Thanks to magnesium and potassium, eating avocado promotes healthy nervous and muscular systems and a strong immune system. It is also a good antioxidant due to its vitamin C and E content, which are also essential for the body's neurological levels and cardiovascular health, and is beneficial for bone health thanks to its vitamin D content. In addition, being rich in fibre, it helps the body to satisfy appetite, prevent constipation and regulate blood glucose levels.

Dairy products such as milk, yoghurt and cheese are foods with high nutritional density that provide proteins of high biological value, carbohydrates, as well as fat, vitamins and minerals.

Among them, goat's cheese has been made for thousands of years and was probably one of the first dairy products to be produced. There are many types and varieties, such as fresh cheeses, those with a soft paste and natural rind, and those with a soft paste but a mouldy rind, known as rulo. There are also pressed cheeses that are not cooked.

In terms of its composition, goat's cheese provides vitamins A, D and K and contains minerals such as calcium, potassium, iron, magnesium and phosphorus, as well as high levels of selenium and zinc. Compared to other cheeses, it has a high protein content, with 22 grams per 100 grams.

It also contains less saturated fat than other cheeses. Fatty acids, such as capric and octanoic acids, give it some of its organoleptic properties, such as its characteristic smell and slightly sour taste. Goat's cheese is low in sugars and therefore low in lactose. The same is true of the most abundant type of protein in dairy products and derivatives, called caseins, which in goat's milk is of the beta-casein A2 type, which causes fewer digestive problems and milk intolerance. All this makes it a lighter and easier to digest food. It also helps the development of intestinal flora, which is why it is considered a prebiotic food.

For all these reasons, the combination of both foods, avocado and goat's cheese, results in a food with excellent nutritional and organoleptic properties.

A spreadable food is one with a paste-like consistency that can be spread with a knife or spatula on bread, crackers or other similar products to add flavour and texture. Unlike condiments, they are considered an integral part of the dish to which they are added, rather than an accompaniment.

The ease and speed of preparing dishes using spreadable creams, as well as their versatility, has led to an increasing consumption of this type of product. This, combined with growing consumer demand for healthier products with low saturated fat content, has created a need for healthy spreadable creams with increasingly varied flavours and ingredients.

Both avocado and goat's cheese are spreadable on their own, but if the two products are combined directly, the product does not homogenise and separates into phases, resulting in a strange mixture of flavours and fats.

There are no products on the market that combine avocado and goat's cheese in a homogeneous, spreadable form that combines their organoleptic and nutritional properties in a uniform mixture of flavours and fats, with a creamy, aromatic texture and intense flavour, promoting healthy consumption and increasing the range of quick-preparation food products.

### EXPLANATION OF THE INVENTION

The object of the present invention is to obtain an avocado and goat's cheese spread in a homogeneous and spreadable form that combines their organoleptic and nutritional properties in a uniform mixture of flavours and fats, with a creamy, aromatic texture and intense flavour, promoting healthy consumption and increasing the options for quick-preparation food products.

The spreadable avocado and goat's cheese cream that is the subject of this invention comprises at least a cold homogeneous mixture of the following components in the proportion indicated in the:
- Hass avocado: 80% to 90%.
- Lactose-free matured goat's cheese: 6% to 10%.
- Raisins: 3 to 5%.
- Onion, salt, ascorbic acid, potassium sorbate and citric acid: 2 to 4%.

The edible part of the avocado is used, without the shell, skin, seeds, pits, and similar parts, reduced to a purée by sieving. The lactose-free matured goat's cheese is made from at least pasteurised goat's milk, salt, lactase, rennet, calcium chloride, lactic ferments, and penicillium. Ascorbic acid acts as an antioxidant, potassium sorbate as a preservative and citric acid as an acidulant.

The avocado is fresh and the cold production process homogenises and stabilises the mixture without separating the phases, resulting in a uniform mixture of flavours and fats. The fresh avocado is ripened, graded, washed, disinfected, peeled, sieved and crushed. It is then mixed with the rest of the ingredients and, finally, the product is packaged, treated with HPP (High Pressure Processing) and stored in refrigeration for final preservation.

This results in a very creamy, aromatic and intensely flavoured mixture that is unique on the market and has great nutritional value. It can be used for breakfast, lunch and dinner, as well as a fresh and decorative spread in the preparation of sandwiches, burgers and sauces, and can also be eaten as a dessert.

Throughout the description and claims, the word "comprises" and its variants are not intended to exclude other technical features, components, additives or steps. For those skilled in the art, other objects, advantages and features of the invention will be apparent in part from the invention and in part from the practice of the invention. The following examples are provided for illustration purposes and are not intended to restrict the present invention. Furthermore, the invention covers all possible combinations of particular and preferred embodiments indicated herein.

### PREFERRED EMBODIMENT OF THE INVENTION

A preferred embodiment of the invention described herein consists of a spreadable avocado and goat's cheese cream formed by a cold homogeneous mixture of the following components in the indicated proportions:
- Hass avocado: 80% to 90%.
- Lactose-free matured goat's cheese: 6% to 10%.
- Raisins: 3 to 5%.
- Onion, salt, ascorbic acid, potassium sorbate and citric acid: 2 to 4%.

In a preferred embodiment, the edible part of the avocado is used, without the shell, skin, seeds, pits, and similar parts, reduced to a purée by sieving. The lactose-free matured goat's cheese is made from at least pasteurised goat's milk, salt, lactase, rennet, calcium chloride, lactic ferments, and penicillium. Ascorbic acid acts as an antioxidant, potassium sorbate as a preservative and citric acid as an acidulant.

## Claims

1. Spreadable avocado and goat's cheese cream **characterised in that** it comprises at least a cold homogeneous mixture consisting of the following components in the following proportions:
- Hass avocado: 80% to 90%.
- Lactose-free matured goat's cheese: 6% to 10%.
- Raisins: 3 to 5%.
- Onion, salt, ascorbic acid, potassium sorbate and citric acid: 2 to 4%.
